# EUROPEAN PATENT APPLICATION

(11) **EP 2 796 733 A1**
(43) Date of publication of application: **29.10.2014**
(21) Application number: 11877162.5
(22) Date of filing: 26.12.2011
(51) Int. Cl.: F16B 39/26

(54) **SELF-PRESSURIZED RESILIENT GASKET**

(30) Priority: 06.12.2011 CN 201120502292 U
(71) Applicant: Lanzhou Seemine Shape Memory Alloy Co. Ltd., Lanzhou, Gansu 730010 (CN)
(72) Inventor: CHEN, Tianxiang, Lanzhou Gansu 730010 (CN); DA, Guozu, Lanzhou Gansu 730010 (CN); MA, Taolin, Lanzhou Gansu 730010 (CN); SUN, Baohui, Lanzhou Gansu 730010 (CN); MIAO, Xiangwen, Lanzhou Gansu 730010 (CN); MA, Yuehui, Lanzhou Gansu 730010 (CN)
(74) Representative: Decamps, Alain René François
(86) International application number: PCT/CN2011/084681
(87) International publication number: WO 2013/082840

(57) **Abstract**

The present invention relates to a self-pressurized resilient gasket, which belongs to the field of electric power system fasteners, and comprises an annular gasket body (1). The gasket body (1) is symmetrically folded into a V-shape by utilizing the central axis as an axis of symmetry, the folded edges are the pressurization position (2) and the open edges are the supporting position (2). The V-shaped circular arc angle α of the gasket body (1) is 140° - 160°, and the radius R of the circular arc is 10mm - 30mm. The self-pressurized resilient gasket is made of a memory alloy, and utilizes the characteristics of the memory alloy-- memory performance and superelasticity characteristic to effectively solve the problems that common 65Mn and 60Si2MnA spring gaskets may lose elasticity in case of being under a higher temperature frequently, thus losing the effect of preventing a fastened piece from being loosened, so that the fastened piece is loosened and contact resistance is increased due to poor contact, thus causing heating more easily, which bums the fastener and the fastened piece, and thereby causing faulted power failure. The self-pressurized resilient gasket saves a number of manpower and material resources required by regularly replacing all the fasteners, and has very good economic and social benefits.

## Description

### FIELD OF THE INVENTION

The present invention belongs to the technologies of electric power system fasteners, and in particular, relates to a fastener resilient gasket of a strong current system, and specifically relates to a self-pressurized resilient gasket.

### BACKGROUND OF THE INVENTION

65Mn and 60Si2MnA spring gaskets used in electric power system fasteners may effectively prevent a fastened piece from being loosened under a normal state. However, the materials are frequently under a higher temperature (heating caused by current impact or heating caused by loosening of a fastener due to shaking) may lose elasticity, thus losing the effect of preventing the fastened piece from being loosened. After the fastened piece is loosened, the contact resistance is increased due to poor contact, thus causing heating more easily, which bums the fastener and the fastened piece, and thereby causing faulted power failure. At present, the power failure faults of power supply enterprises caused due to this reason occur frequently. A number of manpower and material resources are required by regularly placing all the fasteners so as to prevent the faults, and the economic loss and social loss caused thereof are quite staggering.

The self-pressurized resilient gasket saves a number of manpower and material resources required by regularly replacing all the fasteners, and has very good economic and social benefits

### SUMMARY OF THE INVENTION

The technical problem to be solved by the present invention is to provide a self-pressurized resilient gasket which may increase elasticity when a fastener is heating, and may prevent a fastened piece from being loosened, so as to solve the problem that when big current impact or big current impact caused by lightning stroke occasionally occurs to the 65Mn and 60Si2MnA spring gaskets used in the current electric power system, the fastener may lose elasticity with the increasing of the temperature to make the fastened piece loosened, thus causing disabled fastening.

The present invention adopts the following technical solution to solve the technical problem.

A self-pressurized resilient gasket comprises an annular gasket body. The gasket body is symmetrically folded into a V-shape by utilizing the central axis as an axis of symmetry, the folded edges are the pressurization position, and the open edges are the supporting position.

The V-shaped circular arc angle α of the gasket body is 140° - 160°, and the radius R of the circular arc is 10mm - 30mm.

The gasket body is made of a memory alloy.

The self-pressurized resilient gasket is made of a memory alloy. By utilizing the characteristics of the memory alloy -- memory performance and superelasticity characteristic, and relying on self superelasticity, the self-pressurized resilient gasket not only has the functions of the common 65Mn and 60Si2MnA spring gaskets; more importantly, when instantaneous big current impact or big current impact caused by lightning stroke occasionally occurs to the electric power system, the self-pressurized resilient gasket may cause the fastener heated and increase the elasticity with the increasing of the temperature. The self-pressurized resilient gasket may prevent the fastened piece from being loosened to make the fastening disabled due to the losing of the elasticity caused by limited temperature increasing, may avoid faulted power failure caused the loosening of the fastened piece, thus saving a number of manpower and material resources required by regularly placing all the fasteners, being capable of retrieving the economic loss and social loss, and having very good caused economic and social benefits.

### SHORT DESCRIPTIONS OF DRAWINGS

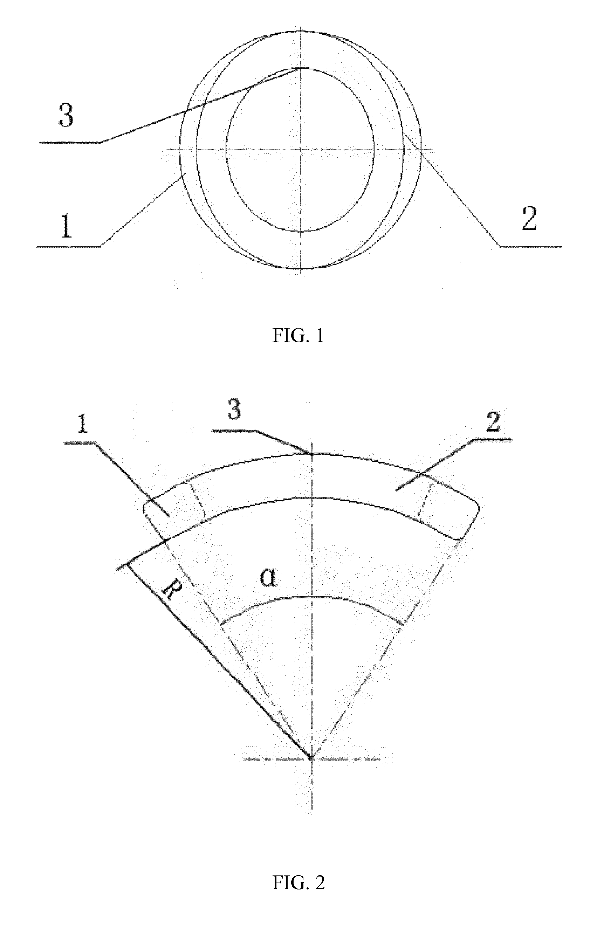

FIG. 1 is a structure view of the present invention;
FIG. 2 is a schematic view of V-shape circular arc angle; and

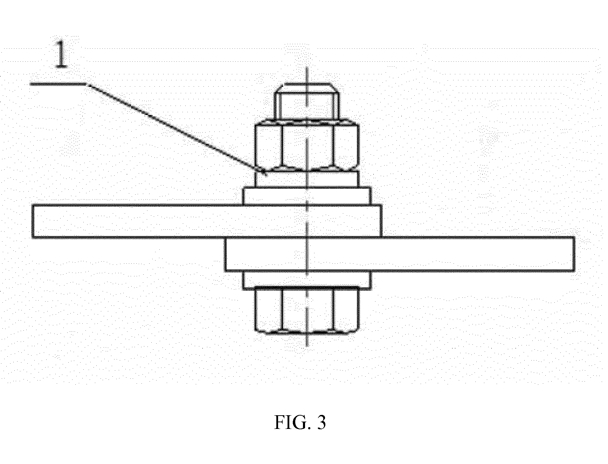

FIG. 3 is a using state schematic view of the present invention.

### DETAILED DESCRIPTIONS OF PREFERRED EMBODIMENTS

The present invention relates to a self-pressurized resilient gasket, which adopts a gasket body 1 that is made of a memory alloy, and a structure of utilizing the central axis as an axis of symmetry, wherein the folded edges are the pressurization position 3, and the open edges are the supporting position 2. The V-shaped circular arc angle α of the gasket body is 140° - 160°, and the radius R of the circular arc is 10mm - 30mm. The self-pressurized resilient gasket is prepared by cutting a single memory alloy plank plane, shaping the plane into a V-shape by heating, and then performing a heat treatment process of quenching at 800°C, tempering at 500°C , and processing the temperature to more than 60°C, to make the self-pressurized resilient gasket have memory performance and superelasticity. The self-pressurized resilient gasket is stalled on a fastener under a normal temperature or a low temperature, and a deformation part is pressed flatly through a nut. Pressurizing is applied by relying on the superelasticity or the memory restoring force after being heated, and through the memory restoring of the pressurization position 3 to unfold the supporting position 2, so that the fastened piece is reliably connected and not loosened.

## Claims

1. A self-pressurized resilient gasket, comprising an annular gasket body, **characterized in that** the gasket body (1) is symmetrically folded into a V-shape by utilizing the central axis as an axis of symmetry, the folded edges are the pressurization position (3), and the open edges are the supporting position (2).

2. The self-pressurized resilient gasket according to claim 1, **characterized in that** the V-shaped circular arc angle α of the gasket body (1) is 140° - 160°, and the radius R of the circular arc is 10mm - 30mm.

3. The self-pressurized resilient gasket according to claim 1 or 2, **characterized in that** the gasket body (1) is made of a memory alloy.
